# EUROPÄISCHE PATENTANMELDUNG

(11) **EP 1 426 455 A1**
(43) Veröffentlichungstag der Anmeldung: **09.06.2004**
(21) Anmeldenummer: 03025882.6
(22) Anmeldetag: 12.11.2003
(51) Int. Cl.: C22B 9/16, C22B 21/00, C22B 26/22, F27B 3/04, F27D 3/16, F27D 21/00, B22D 39/00, F27D 23/04

(54) **Verfahren zum raschen Schmelzen eines Metalles, wie Magnesium, und Schmelzvorrichtung dazu**

(30) Priorität: 04.12.2002 DE 10256513
(71) Anmelder: Ing. Rauch Fertigungstechnik GmbH, 4810 Gmunden (AT)
(72) Erfinder: Rauch, Erich, Ing., 4810 Gmunden (AT); Sigmund, Alfred, Dr., 4810 Gmunden (AT)
(74) Vertreter: Révy von Belvárd, Peter

(57) **Zusammenfassung**

Bei einem Verfahren zum Schmelzen eines Metalles, insbesondere eines Nicht-Eisenmetalles, wie Magnesium, in einer beheizten Schmelzkammer (4), in welche festes Metall (16) eingebracht und in der eine Strömung (a1, a2) innerhalb der Schmelze erzeugt wird, werden die Strömungsparameter, wie Stärke, Geschwindigkeit, derart gewählt, daß der Zeitraum - verglichen mit dem ohne Strömung - mindestens halbiert ist, in dem die Temperatur der Schmelze an zumindest einer Stelle in einem Abstand von maximal 5 mm von dem eingebrachten festen Metall nicht unter den Liquiduspunkt sinkt. Zu diesem Zweck kann eine Vorrichtung vorgesehen werden, die mit einer die Schmelze in einer mit einer Heizeinrichtung (11) versehenen Schmelzkammer (4) über mindestens eine Ansaugöffnung (21) ansaugenden Pumpe (18) versehen ist, die die Schmelze über und mindestens eine Austrittsöffnung (22) wieder abgibt. Dabei sind sowohl Ansaug- (21) als auch Austrittsöffnung (22) innerhalb des Bades der Schmelzkammer (4) angeordnet.

## Beschreibung

Die Erfindung bezieht sich auf ein Verfahren zum Schmelzen eines Metalles, insbesondere eines Nicht-Eisenmetalles, wie Magnesium, in einer beheizten Schmelzkammer, in welche festes Metall eingebracht und in der eine Strömung innerhalb der Schmelze erzeugt wird. Wenn im Rahmen dieser Erfindung von einem "Metall" die Rede ist, so soll dieser Begriff ebenso Legierungen aller Art betreffen.

Das Erzeugen einer Strömung in einer Schmelzkammer geschieht nach dem Stande der Technik zu den verschiedensten Zwecken. Die WO 99/48637 sieht beispielsweise einen Rührer zur Vermeidung von Schwereseigerungen vor. Innerhalb der Schmelzkammer war zwar eine mit einer eigenen Heizung versehene und durch ein Filter abgesperrte "Schleuse" vorgesehen, aber die Strömung wirkte sich natürlich auf dieses abgesperrte Behältnis nicht aus.

Die DE-A-195 04 415 weist ebenfalls einen Rührer auf, der jedoch dazu bestimmt ist, durch seine Hohlwelle Inertgas in die Schmelze zu stoßen, dieses Inertgas in der Schmelze zu verteilen und damit Oxyde und andere Schwimmstoffe an die Badoberfläche zu treiben.

In beiden obigen Fällen sind die Rührer weit genug von zu schmelzendem festen Metall angeordnet, damit die geringere Viskosität (wie später noch an Hand der der Erfindung zugrundeliegenden Erkenntnisse erläutert wird) der dem Festmaterial fernen Schmelze überhaupt ein effektives Rühren zuläßt. Mit solchen Rührwerken kann natürlich auch die Temperatur des Bades bei Temperaturüberhöhungen leichter vergleichmäßigt werden.

Es sind auch schon Pumpen in eine Schmelzkammer eingebaut worden (z.B. US-A-5,411,240) doch dienten diese dazu, die Schmelze aus der Schmelzkammer in eine weiter Kammer zu fördern, d.h. sie hatten ihre Ansaugöffnung in der Schmelzkammer, wogegen ihr Auslaß gegen diese weitere Kammer gerichtet war.

Um festes Metall in einer Schmelzkammer ohne dortige zu hohe Wärmeverluste rasch schmelzen zu können, ist es bekannt, die das feste Rohmaterial bildenden Masseln vorzuwärmen. Dies ist mit Platz-, Investitions- und Energiekosten verbunden. Um ein schnelleres Schmelzen zu erzielen, werden in der Praxis auch oft Temperaturüberhöhungen in der Schmelzkammer in Kauf genommen. Dies führt aber zu einer starken Belastung der Wandungsauskleidungen des Ofens, seiner Einbauten und des Tiegels selbst, was wiederum die Lebensdauer herabsetzt.

Der Erfindung liegt nun die Aufgabe zugrunde, ein rascheres Schmelzen ohne übermäßige Beanspruchung der Schmelzkammer und ihrer Teile zu erreichen.

Zur Lösung dieser Aufgabe hat die Anmelderin intensive Untersuchungen angestellt, um den Mechanismus des Schmelzens besser zu ergründen. Dabei ergab sich eine Erkenntnis, die zu einem ersten Schritt in Richtung der Erfindung führte. Bei dieser Erkenntnis geht es um folgendes.

Beim heutigen Stand der Technik wird beim Einbringen eines festen Metalls, meist in Form von Masseln, die Schmelze in unmittelbarer Umgebung des noch relativ kalten Festmaterials teilweise unter den Liquiduspunkt gebracht, d.h. es findet in dieser unmittelbaren Umgebung eine mindestens teilweise und jedenfalls vorübergehende Verfestigung statt. Je nach Schmelzintervall der Legierung bildet sich eine mehr oder weniger dicke teilerstarrte Schicht um das Massel. Die Gestalt und das Ausmaß der teilerstarrten Zone sind von der Geometrie des aufzuschmelzenden Gutes und von der ursprünglichen Temperaturverteilung abhängig. Grob gesprochen, bilden sich rund um den festen Metallkörper teilerstarrte Schichten unterschiedlicher Temperatur, die den festen Körper gewissermaßen einhüllen und damit einen rascheren Zutritt heißer Schmelze zu diesen inneren Schichten verhindern.

Anderseits ergibt sich noch ein weiterer Effekt: Die Dauer des teilerstarrten Zustandes und das von der Teilerstarrung betroffene Volumen beeinflussen auch Art und Menge von sich innerhalb der Schmelze bildenden intermetallischen Verbindungen. D.h. daß sowohl das Vermeiden des Anfrierens der Schmelze am kalten Massel als auch eine raschere Aufschmelzung desselben wesentlich zu einer weitgehenden Verhinderung der Bildung solcher, an sich unerwünschten, Verbindungen und damit zu einer besseren Legierungsqualität führt. Denn je länger sich ein bestimmtes Volumen im teilerstarrten Zustand befindet, desto mehr derartiger Verbindungen können entstehen und damit zu einer unerwünschten Veränderung der Legierung bzw. zur Bildung von Sumpf in der Schmelzkammer bzw. deren Tiegel beitragen.

Nachdem also diese beiden Erkenntnisse gewonnen waren, war klar, daß die Erhöhung der Aufschmelzgeschwindigkeit nicht nur eine Frage der Produktivität, sondern auch der letztlich erzielbaren Qualität ist. Nun wurden die Untersuchungen weitergetrieben.

Man stellte fest, daß innerhalb der teilerstarrten Zone rund um das aufzuschmelzende Gut praktisch keine konvektive Wärmeübertragung stattfindet. Dies ist es ja, was zu der oben beschriebenen Erscheinung einer "Hülle" teilerstarrten Metalles rund um das feste Metall führt. Innerhalb der teilerstarrten Zone herrscht nur Wärmeleitung mit relativ geringen Temperaturgradienten, und die Zone wirkt im Vergleich zur flüssigen Schmelze wie eine Wärmedämmung. Dies erklärt aber auch, warum die bekannten - sowieso zu anderen Zwecken eingesetzten - Rührwerke an diesem Zustand nichts zu ändern vermochten, weil sie ja eine Strömung nur in einem Bereich niedriger Viskosität zu erzielen vermochten, nicht aber im teilerstarrten Bereich viel höherer Viskosität.

Diese letztere Erkenntnis der Beeinflußung des Rühreffektes durch unterschiedliche Viskositäten sollten eigentlich den Fachmann von der Ausbildung einer Strömung in der Schmelzenkammer zur Problemlösung abhalten. Insofern ist es überraschend, daß erfindungsgemäß gefunden wurde, daß sich die gestellte Aufgabe dann lösen läßt, wenn die Strömungsparameter, wie Stärke, Geschwindigkeit, derart gewählt werden, daß der Zeitraum - verglichen mit dem ohne Strömung - mindestens halbiert ist, in dem die Temperatur der Schmelze an zumindest einer Stelle in einem Abstand von maximal 5 mm von dem eingebrachten festen Metall nicht unter den Liquiduspunkt sinkt.

Das heißt, daß auch hier, bei der Lösung, zwei erfinderische Schritte vorliegen: Zum einen muß die Strömung eine gewisse Stärke bzw. Geschwindigkeit, und zwar im Bereiche des festen Metalles aufweisen. Letzteres bedeutet, daß eine gewisse Richtwirkung der Strömung angestrebt werden soll, wenn man nicht im ganzen Bade eine ungewöhnlich starke und bisher weder angestrebte noch durchgeführte Strömung erzeugen will. Dieses Teilmerkmal bedeutet aber auch, daß man die Strömungserzeugungseinrichtung möglichst nahe derjenigen Stelle anbringen soll, wo das feste Metall sich in der Schmelze befindet und/oder daß die Strömungsgeschwindigkeit und -energie derart gewählt werden muß, daß sie selbst bei einiger Entfernung der Strömungserzeugungseinrichtung vom festen Metall noch ausreicht, um das im zweiten Teilmerkmal - kein Absinken bereits flüssigen Metalls unter den Liquiduspunkt - definierte Kriterium zu erreichen. Dabei wurde bei Versuchen auch festgestellt, daß diese Temperaturkriterien mit Sonden relativ leicht zu messen sind, ja daß - wie noch ausgeführt wird - es sogar im Rahmen der Erfindung günstig ist, mindestens ein Temperaturfühler in einem Abstand von der Heizeinrichtung (um seinen Meßwert nicht zu verfälschen) innerhalb der Strömungsrichtung der Strömungserzeugungseinrichtung, und insbesondere einer dafür verwendeten Pumpe, vorzusehen. Auch der Zeitraum läßt sich leicht bestimmen, indem einmal mit und einmal ohne Strömung gemessen wird.

Hier soll gleich gesagt werden, daß die Erfindung nicht auf eine bestimmte Strömungserzeugungseinrichtung beschränkt ist, obwohl mindestens eine Pumpe (es können auch mehrere sein) bevorzugt ist. Alternativ kann ein eine entsprechend starke Strömung erzeugendes Rührwerk sein - besser noch eine induktive Rühreinrichtung, wie sie beim Stranggießen zuweilen eingesetzt wird. Hier läßt sich nämlich auch leicht eine auf das feste Metall zu gerichtete Strömung erzeugen. Allerdings sind derartige induktiven Rührer teuer und energieaufwendig, weshalb Pumpen bevorzugt sind. Jedenfalls haben Vergleichsversuche gezeigt, daß mit dem erfindungsgemäßen Verfahren ein bis zu zehnmal schnelleres Aufschmelzen des festen Metalles möglich ist. Dies auch, wenn man die Möglichkeit der Mitnahme des festen Metalles in dazu vorgesehenen Bewegungseinrichtungen in Betracht zieht, wie dies bei der Ultraschallreinigung, insbesondere optischer Glaskörper, mit einer Auf- und Abbewegung (alternativ wäre eine karussellartige Einrichtung) durchgeführt wird. Hier haben Versuche gezeigt, daß die dabei notwendigerweise entstehende starke Wirbelbildung eher nachteilig ist.

Der Meßabstand von 5mm soll tatsächlich das zulässige Maximum darstellen, zwar versteht es sich, daß eine gewisse Beschleunigung des Schmelzens schon dann eintreten würde, wenn zumindest eine äußerste dünne Schicht aus der das feste Metall umgebenden "Hülle" abgetragen wird, doch reicht dies, wegen der oben erläuterten Funktionsmechanismen der Wärmeübertragung kaum aus, um den Schmelzvorgang entscheidend zu beschleunigen. Vorzugsweise aber soll das damit zusammenhängende Kriterium - kein Absinken unter den Liquiduspunkt - bereits in einem Abstand von 3mm oder sogar von 1 mm erfüllt sein.

Ein für die Praxis durchgeführter Schmelzvorgang unterscheidet sich grundsätzlich etwa vom Bleigießen am häuslichen Herd. Denn es ist vor allem auch in Betracht zu ziehen, daß das zugeführte Rohmaterial allen möglichen Verunreinigungen unterworfen ist, die beim Schmelzen in das Bad gelangen und dort möglichst von der reinen Metallschmelze gesondert werden sollen. Ein Teil dieser Verunreinigungen wird auf Grund des spezifischen Gewichtes zu Boden sinken; ein anderer Teil wird jedoch als Schwimmstoff an die Badoberfläche gelangen. Deshalb wird angestrebt, daß die Strömung im wesentlichen eine von der Badoberfläche und/oder dem Boden der Schmelzkammer wegzielende Hauptkomponente besitzt. Damit wird ein neuerliches Einrühren der sich nach oben oder unten gesondert habenden Verunreinigungen unter Verschlechterung der Schmelzenqualität vermieden. Diese wegzielende Hauptkomponente erhält man am besten, wenn die Strömung eine im wesentlichen horizontale Komponente besitzt.

Die obigen Erläuterungen zur Funktion des Schmelzens zeigen aber auch, wo allenfalls ein Gefahrenpunkt bei der Durchführung des erfindungsgemäßen Verfahrens liegen kann: Es wird eine heiße Strömung flüssigen Metalles gegen ein Objekt gerichtet, das infolge seines teilerstarrten Zustandes eine deutlich niedrigere Temperatur aufweist. Der Effekt wird natürlich sein, daß sich auch die Strömung der Schmelze abkühlt. Insbesondere wenn die Strömung dabei mehrmals im Kreislauf geführt wird, kann sich ihr Aufschmelzeffekt deutlich vermindern. Deshalb ist es vorteilhaft, wenn die Strömung hinter dem festen Metall gegen eine beheizte Fläche der Schmelzkammer gerichtet wird und sich so immer wieder aufheizt.

Um die oben angesprochenen Temperaturkriterien überprüfen zu können, ist es vorteilhaft, wenn die Temperatur innerhalb der Strömung, insbesondere stromabwärts des festen Metalles, gemessen wird. Dies kann gleich dazu benutzt werden, in Abhängigkeit von der gemessenen Temperatur die Heizleistung in einer beheizten Schmelzkammer so zu regeln, daß sich die gemessene IST-Temperatur auf die jeweilige SOLL-Temperatur einstellt, d.h. auf nicht unter den Liquiduspunkt in einem Abstand von 5mm bzw. 3 oder 1mm.

Im Hinblick auf die obigen Erläuterungen zur Strömungserzeugungseinrichtung ist es bevorzugt, wenn eine erfindungsgemäße Vorrichtung zur Durchführung des Verfahrens, mit einer in einer die Schmelze in einer mit einer Heizeinrichtung versehenen Schmelzkammer über mindestens eine Ansaugöffnung ansaugenden Pumpe versehen ist, die die Schmelze über und mindestens eine Austrittsöffnung wieder abgibt, und daß sowohl Ansaug- als auch Austrittsöffnung innerhalb des Bades der Schmelzkammer angeordnet sind. Wenn hier von "mindestens einer" Ansaug- bzw. Austrittsöffnung die Rede ist, so versteht es sich, daß etwa rund um eine Massel mehrere Saug- und/oder Strahldüsen vorgesehen sein können, welche eine Saug- und/oder Druckströmung hervorrufen.

Für eine auf das feste Metall zielgerichtete Strömung ist es besonders von Vorteil, wenn für das feste Metall ein im wesentlichen fester Ablageplatz vorgesehen ist und wenigstens eine der Öffnungen von oder zur Pumpe auf diesen Ablageplatz gerichtet ist, insbesondere wenigstens die Austrittsöffnung. Dieser Ablageplatz kann mittels einer das feste Metall in einem Abstand vom Boden der Schmelzkammer haltenden Halteeinrichtung definiert sein, was den Vorteil hat, daß die Schmelzeströmung das feste Metall von allen Seiten umspülen und die noch nicht vollständig aufgeschmolzenen, also noch teilerstarrten, Schichten in das heiße Bad zum vollständigen Aufschmelzen bringen können.

Ein erfindungsgemäßes Kriterium ist, daß die Strömung der Schmelze eine derartige Stärke bzw. Geschwindigkeit im Bereiche des festen Metalles erhält, daß eine bestimmte Temperaturbedingung erfüllt ist. Dies kann aber bei verschiedenen Metallen und verschiedenen Schmelztemperaturen durchaus unterschiedlich sein. Deshalb ist es günstig, wenn die Pumpe eine variable Drehzahl aufweist und so beispielsweise manuell auf eine befriedigende Drehzahl eingestellt werden kann. Noch bevorzugter ist es allerdings, wenn mindestens ein Sensor vorgesehen ist, wie ein Füllstandssensor, durch den die Drehzahl der Pumpe über einen Regelkreis regelbar ist. Denn auch der Füllstand, die Größe der zugeführten Masseln, die zu messende Strömungsgeschwindigkeit (durchaus verschieden bei verschiedenen Viskositäten), die Frage ob gerade festes Metall in die Schmelzkammer eingebracht wurde (dann höhere Drehzahl) oder schon alles aufgeschmolzen ist (dann niedrigere Drehzahl), oder die Temperatur der Schmelzkammerwand (die ja die Strömung nach dem Abkühlen an einer Massel wieder aufwärmen soll) kann von einem Sensor erfaßt werden und für eine Regelung von Bedeutung sein. Beispielsweise können mehrere dieser Parameter in ein neuronales Netzwerk unter Gewichtung seiner Bedeutung eingebracht werden, um die Drehzahl zu regeln. Aus der obigen Aufzählung der Parameter geht aber hervor, daß es vorteilhaft ist, wenn der mindestens eine Sensor einen Temperaturfühler umfaßt.

Es wurde oben von der auf das feste Metall zielgerichteten Strömung gesprochen, die sich durch einen fest vorgesehenen Ablageplatz für das feste Metall erzielen ließe. Mit oder ohne einem solchen festen Ablageplatz kann aber eine solche zielgerichtete Strömung auch dadurch erzielt werden, mindestens eine Leiteinrichtung für die Strömung der Pumpe vorgesehen ist. Diese Leiteinrichtung wird dann bevorzugt die Schmelze in diejenige Richtung leiten, wie sie oben an Hand des Verfahrens erläutert wurde, nämlich einerseits am festen Metall zum Abtragen der teilerstarrten Schichten vorbei, aber möglichst nicht gegen die Badoberfläche und/oder gegen den Boden bzw. gegen eine heiße Schmelzkammerwand, um ein Wiederaufwärmen der durch das feste und teilerstarrte Metall abgekühlten Schmelze zum erzielen.

Wenn also eine Pumpe zur Erzeugung der Strömung verwendet wird, so kann diese Pumpe jeder geeigneten Art sein; sie kann auch ihren Rotor (oder Kolben) außerhalb der Schmelze haben, so daß ihr diesem die Schmelze über ein mit einer Ansaugöffnung innerhalb der Schmelze versehenem Rohr zugeführt und über ein weiteres Rohr in die Schmelze rückgeführt wird. Dies aber führt leicht zu unerwünschter Abkühlung, weshalb es bevorzugt ist, wenn nicht nur Ansaug- und Austrittsöffnung, sondern auch der Pumpenrotor oder -kolben innerhalb des Bades der Schmelzkammer angeordnet sind.

Weitere Einzelheiten der Erfindung ergeben sich an Hand der nachstehenden Beschreibung von in der Zeichnung schematisch dargestellten Ausführungsbeispielen. Es zeigen:
- Fig. 1: einen Längsschnitt durch einen erfindungsgemäßen Schmelzofen;
- Fig. 2: einen Schnitt nach der Linie II-II der Fig. 1, jedoch bei einer abgewandelten Form des nur eine Massel aufnehmenden Gestelles und seiner Leitflächen, zu der die
- Fig. 3: eine weitere Variante in einer dem Pfeil III der Fig. 1 entsprechenden Draufsicht veranschaulicht.

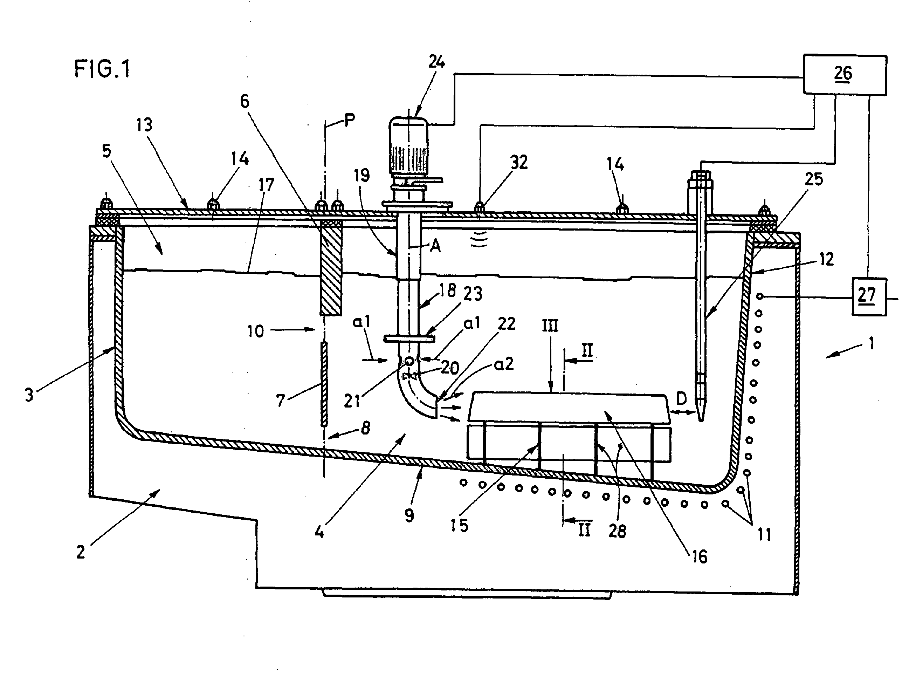

Fig. 1 zeigt einen Zweikammerofen 1 mit einem in einen Ofenraum 2 eingesetzten Tiegel 3, der entlang einer Ebene P in eine Schmelzkammer 4 und eine Entnahmekammer 5 unterteilt ist. Zur Unterteilung dient einerseits eine Abschirmwand oder Schott 6 und eine darunterliegende weitere Querwand 7, die gegebenenfalls nach unten hin eine schmale Öffnung 8 freiläßt, um es einem etwaigen Bodenschlamm zu ermöglichen, über den schiefen Tiegelboden 9 gegen die Schmelzkammer 4 hin abzugleiten. Dagegen dient eine Öffnung 10 in üblicher Weise für die Kommunikation der Schmelze von einer Kammer zur anderen. Es versteht sich, daß diese Ausbildung lediglich ein Beispiel darstellt, und daß der Ofen 1 an sich jeden beliebigen bekannten Aufbau haben kann.

Innerhalb des Ofenraumes 2 ist in bekannter Weise eine nur angedeutete Heizung 11 vorgesehen, die an sich beliebiger Art sein kann. Es kann sich dabei beispielsweise um die Rohre eines Gasbrenners handeln oder um induktive Heizwendeln. Diese Heizung 11 beheizt im vorliegenden Ausführungsbeispiel nicht nur den Boden 9 des Tiegels 3, sondern auch mindestens eine Seitenwand 12. Die Oberseite des Tiegels 3 ist dagegen von einer Tiegelabdeckplatte 13 abgedeckt, um Wärmeverluste und/oder den Zutritt von Sauerstoff zu den Kammern 4, 5 zu vermeiden. In der Tiegelabdeckplatte 13 können Einlaßstutzen 14 zum Einlassen eines Inertgases (z.B. Argon) oder Schutzgases (z.B. der mit Mg Mg-Nitrid bildende Stickstoff) vorgesehen sein, um so die Oberfläche der Schmelze mit dem Inertgas bzw. Schutzgas abzudecken.

All diese Teile sind herkömmlicher Natur und lassen sich im Bedarfsfall entsprechend abändern. In der Schmelzkammer 4 ist nun ein Gestell 15 für die Ablage von in die Schmelzkammer 4 eingebrachten Masseln 16, also Blöcken festen Metalls, vorgesehen. Durch dieses Gestell 15 werden die Masseln 16 jeweils vom Boden 9 in einem Abstand gehalten, so daß die Schmelze 17 das jeweilige Massel von allen Seiten umgibt und Wärme zum Schmelzen überträgt.

Erfindungsgemäß ist nun innerhalb der Schmelzkammer 4 eine Strömungserzeugungseinrichtung, vorzugsweise in Form einer Pumpe 18, vorgesehen, welche im vorliegenden Ausführungsbeispiel ein Pumpenrohr 19 aufweist, in welchem eine entlang einer Achse A verlaufende Welle gelagert ist, die am Ende einen, lediglich strichliert angedeuteten, Pumpenrotor 20 antreibt. Über in der Schmelzenkammer 4 befindliche Ansaugöffnungen 21 saugt nun dieser Pumpenrotor 20 Schmelze an, wobei er eine Saugströmung entsprechend den Pfeilen a1 erzeugt. Der Pumpenrotor 20 wird in an sich bekannter Weise an der Oberseite der Pumpe 18 von einem, vorzugsweise drehzahlvariablen, Motor 24 angetrieben.

Das untere Ende des Pumpenrohres 19 endet in einer ebenfalls in der Schmelzkammer 4 befindlichen Austrittsöffnung 22, die vorzugsweise gegen denjenigen Platz gerichtet ist, wo die Masseln 16 am Gestell 15 untergebracht werden, so daß sich ein Strömungsverlauf entsprechend den Pfeilen a2 ausbildet. Es ist zwar denkbar, die Austrittsöffnung 22 in eine andere Richtung weisen zu lassen, so daß der von ihr ausgehende Schmelzenstrom die Masseln 16 gewissermaßen nach dem "Billardprinzip" erreicht, doch wird dies im allgemeinen energieaufwendiger sein. Oberhalb der Ansaugöffnungen 21 ist vorzugsweise ein Leitblech 23 vorgesehen, um die Saugströmung sich nicht gegen das Badniveau auswirken zu lassen. Ein ähnliches Leitblech könnte unterhalb der Ansaugöffnungen 21 vorgesehen werden, um eine Kurzschlußwirkung des aus der Austrittsöffnung 22 austretenden Schmelzenstromes direkt zu den Ansaugöffnungen 21 zu verhindern.

Ferner sei bemerkt, daß an Stelle einer Pumpe 18 auch jede andere Strömungserzeugungseinrichtung Verwendung finden könnte, wie etwa ein mechanisches Rührwerk oder ein, beispielsweise außerhalb des Tiegels 3 oder in dessen Auskleidung untergebrachtes induktives Rührwerk, doch wird deren Wirkungsgrad im allgemeinen etwas geringer sein. Auch könnte der Pumpenrotor 20 außerhalb des Tiegels 3 angeordnet werden, wenn nur die Ansaug- und Austrittsöffnungen 21 bzw. 22 sich innerhalb der Schmelzkammer 4 befinden, doch ist damit im allgemeinen verbunden, daß sich der Pumpenrotor dann auf niedrigerem Temperaturniveau befindet, was weniger erwünscht ist.

Die Strömung a2 ist nun, wie ersichtlich, gegen denjenigen Platz gerichtet, wo die Masseln 16 liegen, d.h. etwas oberhalb des Gestells 15. Es wäre denkbar, die Anordnung so zu treffen, daß die Saugströmung a1 für eine intensive Umspülung der Masseln 16 sorgt, doch ist es bevorzugt, wenn dies die Druckströmung a2 tut. Die Drehgeschwindigkeit des Rotors 20, die Nähe der Austrittsöffnung 22 zu den Masseln 16 und die Energie des Motors 24 sind dabei so gewählt, daß derjenige Zeitraum - verglichen mit dem bei abgestellter Pumpe 18 - mindestens halbiert ist, in dem die Temperatur der Schmelze an zumindest einer Stelle in einem Abstand von maximal 5 mm von dem eingebrachten festen Metall 16 nicht unter den Liquiduspunkt sinkt. Der Sinn dieser Maßnahme wurde oben bereits erläutert. Man wird also vorteilhaft mindestens einen Temperaturfühler 25 an der Tiegelabdeckplatte 13 montieren und ihn zweckmäßig in einem Abstand D von den Masseln 16 anordnen, jedoch in einem solchen Abstand von der Seitenwand 12, daß dessen Beheizung sein Meßergebnis im wesentlichen nicht beeinträchtigt. Der Abstand D ist zweckmässig mit maximal 0,5 cm bevorzugt etwas geringer, z.B. maximal 0,3 cm, zu wählen. Da die Strömung a2 sich beim Vorübergleiten an dem kalten Massel 16 abkühlt, wird ihre Temperatur am Ende des Massels 16, d.h. im Bereiche der unteren Spitze des Temperaturfühlers 25, am niedrigsten sein. Wenn diese dort gemessene Temperatur über dem Liquiduspunkt liegt, dann kann man davon ausgehen, daß wenigstens der Großteil der Oberfläche des Massels 16 im Abstand von maximal 0,5 cm oberhalb der Liquidustemperatur liegt.

Daher ist es vorteilhaft, diese Temperatur mittels mindestens eines Temperaturfühlers 25 zu überwachen. Wird die dort gemessene Temperatur zu niedrig, so kann man die Strömungsparameter verändern, d.h. man bringt beispielsweise die Pumpe 18 und deren Austrittsöffnung 22 näher an das Massel 16 heran. Alternativ oder zusätzlich kann man die Temperatur der Heizeinrichtung 11 erhöhen. Dies ist besonders deshalb wirksam, weil - wie ersichtlich - die Strömung a2 auch gegen die beheizte Seitenwand 12 gerichtet ist, so daß sie nach Abkühlung durch das feste Metall des Massels 16 entlang der Seitenwand 12 strömt und von dort her neu an Temperatur gewinnt. Allerdings muß die Anordnung nicht unbedingt so sein, weil es ebenso möglich wäre, die Strömung a2 von oben auf das Massel 16 wirken zu lassen, so daß die daran vorbeigeströmte Schmelze anschließend den beheizten Boden 9 berührt, um sich wieder aufzuwärmen. Auch Kombinationen beider Strömungsrichtungen wären denkbar.

Bevorzugt ist es allerdings, wenn, wie erwähnt, die Drehzahl der Pumpe 18 verstellbar ist, so daß sich die Geschwindigkeit der Strömung beeinflussen läßt. Diese Verstellung läßt sich natürlich auch manuell bewerkstelligen, doch ist es vorteilhafter, wenn man einen Regelkreis, z.B. mit einem Prozessor 26 vorsieht, der mit dem mindestens einen Temperaturfühler 25 verbunden ist und dessen Signal erhält. Sind mehrere Temperaturfühler vorgesehen, so kann der Prozessor 26 deren Signale gewichten, wobei sich beispielsweise die Gewichtung in Strömungsrichtung der Strömung a2 verschiebt, etwa indem dem am Ende angeordneten Temperaturfühler 25 und seinem Signal das größte Gewicht beigemessen wird.

Der Prozessor 26 hat im vorliegenden Ausführungsbeispiel zwei Ausgänge, denn er ist einerseits mit dem Motor 24 (und seiner nicht dargestellten Ansteuerstufe) zur Veränderung der Drehzahl der Pumpe 18 verbunden. Anderseits geht eine Ausgangsleitung an eine Steuerstufe 27 zur Einstellung der Heizleistung der Heizung 11. Denkbar ist beispielsweise eine Kaskadenregelung, bei der zunächst die Drehzahl der Pumpe 18 bis zu einem, gegebenenfalls einstellbaren, Maximum verstellt wird, und daß bei noch immer zu tiefer Temperatur am Temperaturfühler 25 dann die Heizleistung der Heizung 11 erhöht wird. Ferner kann ein Füllstandssensor 32 (hier als akustischer Füllstandssensor nach dem Echo-Prinzip angedeutet, doch an sich beliebiger Art) vorgesehen werden, welcher über den Prozessor 26 die Drehzahl der Pumpe 18 beeinflußt.

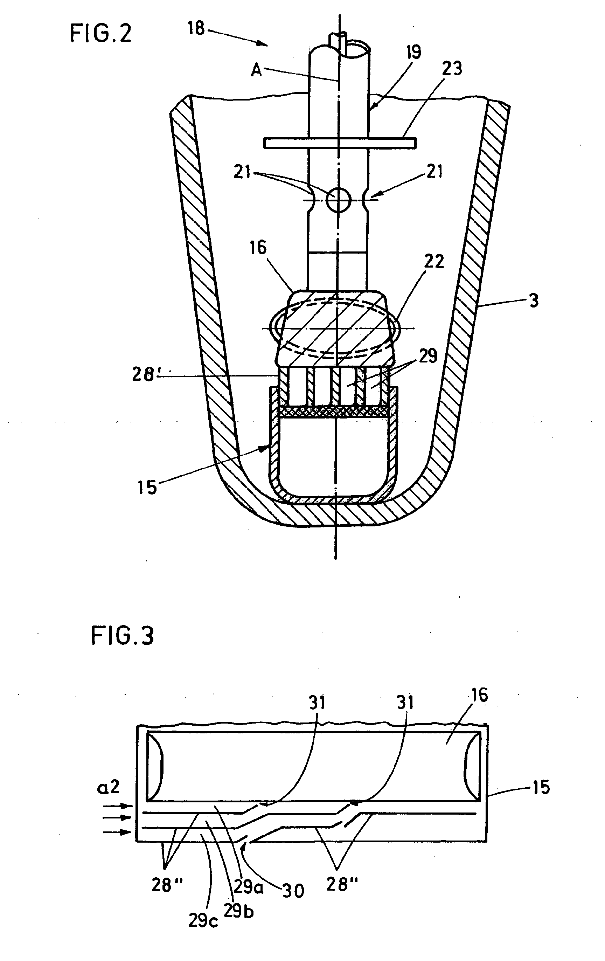

Wenn nun die Strömung der Pumpe 18 das feste Metall 16 umströmen soll, so ist es vorteilhaft, wenn außer der Leitfläche 23 an der Pumpe auch im Bereiche des Massels 16 Leitflächen vorgesehen sind, um zu sichern, daß die Strömung wirklich entlang der Oberfläche des Massels 16 und gegen die beheizte Wand 12 fließt. Zu diesem Zweck ist es vorteilhaft, wenn beispielsweise das Gestell 15 mit entsprechenden Leitflächen 28 versehen ist, wie sie in Fig. 2 in einer Variante dargestellt sind. Dabei sei darauf hingewiesen, daß die Erfindung keineswegs auf am Boden 9 stehende Gestelle eingeschränkt ist, vielmehr auch von der Tiegelabdeckplatte 13 herabhängende, korbähnliche Gestelle Verwendung finden könnten.

Im Falle der Fig. 2 steht das Massel 16 auf vertikalen Leitblechen 28', die zwischen einander Strömungskanäle 29 bilden, in denen das feste Metall des Massels 16 von unten her mit heißer Schmelze bespült wird, wenn die Pumpe 18 im Betrieb ist. Deren Austrittsöffnung 22 ist hier oval, so daß das Massel 16 auch seitlich von einem Strom heißer Schmelze umspült wird. Die Austrittsöffnung 22 ist aber weit genug von dem Massel 16 entfernt, daß die aus ihr austretende Strömung auch in die Strömungskanäle 29 gelangt. Es versteht sich, daß eine solche Anordnung mit gegen das Massel 16 hin offenen Strömungskanälen auch an allen anderen Flächen des Massels 16 vorgesehen werden können.

Fig. 3 dagegen zeigt eine Variante, bei der die Flächen der Leitbleche 28" parallel zu den Flächen des Massels 16 verlaufen. Demnach tritt die Strömung a2 zwischen drei zueinander parallelen Blechen 28" in die aus diesen gebildeten Strömungskanäle 29a, 29b, 29c ein. Im Verlaufe des Strömungsweges mag sich die Schmelzenströmung am festen Metall 16 abkühlen. Um nun immer von neuem heiße Schmelze an die Außenflächen des zu schmelzenden Metalles 16 heranzuführen, verengt sich im ersten Drittel der Länge des Massels 16 der Strömungskanal 29a zu einer schmalen Öffnung 31, und es wird der mittlere Strömungskanal 29b mit noch heißerer Schmelze an das Massel 16 herangeführt. Gleichzeitig wird der äußerste Kanal 29c an die mittlere Bahn umgelenkt, wo bisher der Strömungskanal 29b lag. Um dabei gleichzeitig neue heiße Schmelze einzubringen, kann eine Art Injektoröffnung 30 vorgesehen sein, die in den Strömungskanal 29c mündet. Nach einem weiteren Drittel Weges wird der äußere Strömungskanal 29c an die Außenfläche des Massels 16 herangeführt, wobei wieder eine Öffnung 31 für den Durchtritt der über den Kanal 29b geförderten Schmelze vorgesehen ist. Diese Verengungen bringen auch eine Zunahme der Strömungsgeschwindigkeit mit sich, was zum rascheren Abschmelzen beiträgt.

Wenn auch diese Anordnung in einer Draufsicht gezeigt ist, so ist verständlich, daß ähnliche Anordnungen an allen Flächen des Massels 16 (oder nur einem Teil davon) vorgesehen sein können. Auch wäre es denkbar, die Strömung des jeweils am Massel 16 vorbeiführenden Kanals, wie des Kanals 29a, nach oben (oder nach der Seite) wegzuführen. Wesentlich ist in jedem Falle, daß durch die Ausnützung einer Injektorwirkung oder auf andere Weise über die Länge des Massels 16 stets von neuem heiße Schmelze an seine Oberfläche herangeführt wird. In jedem Falle aber wird durch mindestens eine Leiteinrichtung 28, 28' bzw. 28" der Strömung a2 eine von der Badoberfläche und/oder dem Boden 9 der Schmelzkammer 4 wegführende Richtung vorgegeben.

Im Rahmen der Erfindung sind zahlreiche Varianten denkbar; beispielsweise könnte das Gestell 15 gegen die Austrittsöffnung 22 hin verstellbar sein. Ferner könnten mehr als eine Pumpe oder um das Massel 16 herum Austritts- 22 und/oder Ansaugöffnungen 21 vorgesehen werden. Ferner kann das Gestell 15 so ausgelegt sein, daß es mindestens zwei Masseln 16 trägt. Die Art der Pumpe ist für die Erfindung ebenfalls nicht entscheidend, denn es kann statt einer Pumpe mit Rotor auch eine Kolbenpumpe mit einem Kolben als Pumpkörper verwendet werden. Ferner ist es zwar günstig, wenn das Massel in der Schmelzkammer liegt, doch funktioniert das Prinzip der Erfindung natürlich ebenso bei vertikalen Masseln.

## Patentansprüche

1. Verfahren zum Schmelzen eines Metalles, insbesondere eines Nicht-Eisenmetalles, wie Magnesium, in einer beheizten Schmelzkammer (4), in welche festes Metall (16) eingebracht und in der eine Strömung (a1, a2) innerhalb der Schmelze erzeugt wird, **dadurch gekennzeichnet, daß** die Strömungsparameter, wie Stärke, Geschwindigkeit, derart gewählt werden, daß der Zeitraum - verglichen mit dem ohne Strömung - mindestens halbiert ist, in dem die Temperatur der Schmelze an zumindest einer Stelle in einem Abstand von maximal 5 mm von dem eingebrachten festen Metall nicht unter den Liquiduspunkt sinkt.

2. Verfahren nach Anspruch 1, **dadurch gekennzeichnet, daß** hinsichtlich der Temperatur wenigstens eine der folgenden Bedingungen erfüllt ist:
a) die Temperatur der strömenden Schmelze sinkt in einem Abstand von maximal 3mm, insbesondere im Abstand von 1 mm nicht unter den Liquiduspunkt;
b) die Strömungsparameter, wie Stärke, Geschwindigkeit, werden derart gewählt, daß die die Temperatur an mehr als einer Stelle, insbesondere über den größeren Teil des Umfanges des eingebrachten festen Metalles, in einem Abstand von diesem von maximal 5 mm, vorzugsweise 3mm, unter den Liquiduspunkt sinkt;
c) die Temperatur innerhalb der Strömung, insbesondere stromabwärts des festen Metalles, gemessen wird, und daß vorzugsweise in Abhängigkeit von der gemessenen Temperatur die Heizleistung in einer beheizten Schmelzkammer (4) so geregelt wird, daß sich die gemessene IST-Temperatur auf die in Anspruch 1 oder 2a) genannte SOLL-Temperatur einstellt.

3. Verfahren nach einem der vorhergehenden Ansprüche, **dadurch gekennzeichnet, daß** die Strömung (a1, a2) im wesentlichen eine von der Badoberfläche und/oder dem Boden (9) der Schmelzkammer (4) wegzielende Hauptkomponente, und zwar vorzugsweise eine im wesentlichen horizontale Komponente, besitzt.

4. Verfahren nach einem der vorhergehenden Ansprüche, **dadurch gekennzeichnet, daß** die Strömung (a2) hinter dem festen Metall (16) gegen eine beheizte Fläche (12) der Schmelzkammer (4) gerichtet wird.

5. Vorrichtung zur Durchführung des Verfahrens nach einem der vorhergehenden Ansprüche, mit einer die Schmelze in einer mit einer Heizeinrichtung (11) versehenen Schmelzkammer (4) über mindestens eine Ansaugöffnung (21) ansaugenden Pumpe (18), die die Schmelze über und mindestens eine Austrittsöffnung (22) wieder abgibt, **dadurch gekennzeichnet, daß** sowohl Ansaug- (21) als auch Austrittsöffnung (22) innerhalb des Bades der Schmelzkammer (4) angeordnet sind, und daß vorzugsweise nicht nur Ansaug- (21) und Austrittsöffnung (22), sondern auch der Pumpenrotor (20) oder -kolben innerhalb des Bades der Schmelzkammer (4) angeordnet ist.

6. Vorrichtung nach Anspruch 5, **dadurch gekennzeichnet, daß** für das feste Metall (16) ein im wesentlichen fester Ablageplatz (15) vorgesehen ist, und daß wenigstens eine der Öffnungen (21 bzw. 22) von oder zur Pumpe (18) auf diesen Ablageplatz (15) gerichtet ist, insbesondere wenigstens die Austrittsöffnung (22), und daß vorzugsweise der Ablageplatz mittels einer das feste Metall (16) in einem Abstand vom Boden (9) der Schmelzkammer (4) haltenden Halteeinrichtung (15) definiert ist.

7. Vorrichtung nach Anspruch 5 oder 6, **dadurch gekennzeichnet, daß** mindestens ein Temperaturfühler (25) in einem Abstand von der Heizeinrichtung (11) innerhalb der Strömungsrichtung (a2) der Pumpe (18) vorgesehen ist, und daß vorzugsweise der mindestens eine Temperaturfühler (25) in einem Regelkreis (26, 27) für die Leistung der Heizeinrichtung (11) liegt.

8. Vorrichtung nach einem der Ansprüche 5 bis 7, **dadurch gekennzeichnet, daß** die Pumpe (18) eine variable Drehzahl aufweist, und daß vorzugsweise mindestens ein Sensor (25, 32) vorgesehen ist, wie ein Füllstandssensor (32), durch den die Drehzahl der Pumpe (18) über einen Regelkreis (26) regelbar ist, wobei daß der mindestens eine Sensor insbesondere einen Temperaturfühler (25) umfaßt.

9. Vorrichtung nach einem der Ansprüche 5 bis 8, **dadurch gekennzeichnet, daß** mindestens eine Leiteinrichtung (23, 28) für die Strömung der Pumpe (18) vorgesehen ist, und daß die Leiteinrichtung vorzugsweise wenigstens eine der folgenden Bedingungen erfüllt:
a) durch die mindestens eine Leiteinrichtung (23, 28) ist der Strömung eine von der Badoberfläche und/oder dem Boden (9) der Schmelzkammer (4) wegführende Richtung vorgebbar;
b) durch die mindestens eine Leiteinrichtung (28) ist der Strömung (a2) nach dem festen Metall (16) und vor der Pumpe (18) ein Weg an einer beheizten Wand (12) der Schmelzkammer (4) entlang vorgebbar;
c) mindestens eine Leiteinrichtung (23) ist an der Pumpe (18) selbst angeordnet.

10. Vorrichtung nach einem der Ansprüche 5 bis 9, **dadurch gekennzeichnet, daß** eine Einrichtung (8, 10) vorgesehen ist, durch die aus der Schmelzkammer (4) mindestens eine Entnahmekammer (5) befüllbar ist, und daß vorzugsweise die Befülleinrichtung mindestens eine Kommunikationsverbindung (8, 10) zwischen den beiden Kammern (4, 5) aufweist.
